(19) Europäisches Patentamt
European Patent Office
Office européen des brevets

(11) **EP 3 279 699 A1**

(12) **EUROPEAN PATENT APPLICATION**

(43) Date of publication:
**07.02.2018 Bulletin 2018/06**

(51) Int Cl.:
***G01T 1/29*** *(2006.01)*

(21) Application number: **16183079.9**

(22) Date of filing: **05.08.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Universitätsklinikum Regensburg 93053 Regensburg (DE)**

(72) Inventor: **HELLWIG, Dirk 93049 Regensburg (DE)**

(74) Representative: **Lucke, Andreas Boehmert & Boehmert Anwaltspartnerschaft mbB Pettenkoferstrasse 22 80336 München (DE)**

(54) **IMAGING TECHNOLOGIES**

(57) The disclosure relates to a method comprising steps of: applying a radioactive substance to a subject, wherein the radioactive substance accumulates in a specific region (1) of the subject, wherein the specific region (1) is located below a surface (2) of the subject or at the surface (2) of the subject, arranging a radiation receiving device (8; 22) on the surface of the subject (2) above the specific region (1), wherein the radiation receiving device (8; 22) is adapted to generate a signal from radiation emitted by the radioactive substance and entering the radiation receiving device (8; 22), and detecting the signal by a detection device (3a, 3b; 21). Further, use of a radiation receiving device (8; 22) and an arrangement are disclosed.

Fig. 2

EP 3 279 699 A1

## Description

The disclosure relates to imaging technologies.

BACKGROUND

Several imaging technologies are used in medical and research context for the examination of humans, animals and / or plants or parts of it. Two examples are positron emission tomography (PET) and Cherenkov imaging.

PET is an imaging technique that produces static or dynamic three-dimensional images of radioactivity distributions in a subject. A radioactive substance containing a positron emitting radioisotope is applied to the subject. The radioactive substance is deposited or accumulates in one or more specific regions of the subject, e.g. in tumor cells. Decay of the radioactive substance leads to beta-plus radiation (positrons). A positron emitted by the radioactive substance interacts with the surrounding matter causing loss of kinetic energy of the positron. If the positron binds with an electron as its anti-particle, it will annihilate. As a result of the annihilation of the electron-positron pair, two photons (with an energy of 511 keV each) are created which diverge from the place of annihilation in substantially diametrical directions. The photons can be detected in order to investigate the specific region. The coincidence detection of annihilation photons by a set of at least two detectors arranged around the subject allows to quantitatively estimate the radioactivity concentration within the volume of interest.

PET allows absolute quantification of radioactivity concentrations, if the measurements are corrected for deteriorating effects like detector dead time, detector efficiency, detector calibration, random coincidences, photon scatter and photon attenuation. The correction for scatter and attenuation needs information about the electron density in the field of view (FOV) of the PET system. This information can be obtained from computed tomography (CT) images which are mathematically reconstructed from X-ray transmission measurements. Nowadays, combined PET/CT scanners are the standard equipment for PET examinations. Thus, attenuation and scatter correction of PET measurements is mainly based on data obtained from CT images. Artifacts in the CT images may therefore hamper PET image reconstruction resulting in artifacts in PET images which may be noticed by visual assessment of the images or by quantitative evaluation. CT image artifacts may arise from large gradients in electron density within the examined subject, e.g. around metallic implants or superficial metallic electrodes. No metallic objects should be in the FOV of the PET and CT system to avoid artifacts in the PET and CT images. The same is true for objects with high mass density.

Nuclear magnetic resonance (MR) tomography is another imaging modality used in medicine, veterinary, and research. Magnetic fields and radio waves are used to form images of the investigated subject. Attenuation and scatter correction of PET measurements can also be derived from MR images. Artifacts in MR images may therefore hamper PET image reconstruction resulting in artifacts in PET images which may be noticed by visual assessment of the images or by quantitative evaluation. MR image artifacts may arise from large gradients in susceptibility within the FOV of the MR system, e.g. around metallic implants or superficial metallic electrodes. No metallic or magnetic objects should be in the FOV of the PET and MR system to avoid artifacts in PET and MR images.

Cherenkov imaging is based on Cherenkov radiation which is electromagnetic radiation emitted when a charged particle, e.g. beta-minus radiation (electrons) or beta-plus radiation or a Compton electron liberated in the process of scattering of gamma rays, passes through a dielectric medium at a speed greater than the phase velocity of light in that medium. Similar to PET, a radioactive substance is applied to a subject. Light produced by radiation emitted from the radioactive substance is detected in order to draw conclusions about the tissue where the radioactive substance is accumulated or deposited.

Light from Cherenkov radiation exhibits broadband spectral constituents decreasing with wavelength to the inverse square power. Due to the predominantly shorter wavelengths, the Cherenkov radiation appears bluish-white when observed visually.

SUMMARY

It is an object to provide improved techniques for imaging technologies.

A method according to claim 1, a use of a radiation receiving device according to claim 14 and an arrangement according to claim 15 are provided. Further embodiments are subject matter of dependent claims.

In one aspect, a method is disclosed. The method comprises steps of: applying a radioactive substance to a subject, wherein the radioactive substance accumulates in a specific region of the subject, wherein the specific region is located below a surface of the subject or at the surface of the subject, arranging a radiation receiving device on the surface of the subject above the specific region, wherein the radiation receiving device is adapted to generate a signal from radiation emitted by the radioactive substance and entering the radiation receiving device, and detecting the signal by a detection device.

In another aspect, a use of a radiation receiving device is provided. The radiation receiving device is adapted to generate a signal from radiation emitted by a radioactive substance and entering the radiation receiving device. For example, the radiation receiving device may be used in cases where the specific region of the subject is a suspected or proven malignant tumor, a non-neoplastic tumor, an inflammatory lesion, an infectious lesion, a traumatic lesion, normal or abnormal skin, wounds (either injury induced, such as cuts, abrasions, bites, or blisters, or surgically induced, such as surgical incisions or ostomies), scar tissue, or a parasitic, symbiotic, or infectious infiltration in the subject.

In still another aspect, an arrangement is provided, comprising: a radioactive substance which is applied to a subject, wherein the radioactive substance accumulates in a specific region of the subject, wherein the specific region is located below a surface of the subject or at the surface of the subject, a radiation receiving device which is arranged on the surface of the subject above the specific region, wherein the radiation receiving device is adapted to generate a signal from radiation emitted by the radioactive substance and entering the radiation receiving device, and a detection device which is adapted to detect the signal. The radiation receiving device and / or the detection device may be arranged in an opaque housing. There may be more than one detection device which are adapted to detect the signal.

In the method and / or in the arrangement, the radiation receiving device may be arranged directly on the surface of the subject. At least a portion of the radiation receiving device may be in direct contact with the surface of the subject.

The specific region being located below the surface of the subject may comprise that the specific region is located in the subject close to the surface of the subject, e.g. less than 2 cm, less than 1 cm, less than 0.5 cm or less than 0.2 cm below the surface.

The radioactive substance may accumulate or deposit or may be deposited in more than one specific region of the subject.

For purposes of the present application, the term "subject" refers to a human, an animal, a plant, or a part of a plant. The surface of the subject may be the skin of the subject or a region of injured skin of the subject.

The radioactive substance may be a radionuclide, a chemical compound comprising a radionuclide (e.g. a radiopharmaceutical) or a physical composition comprising a radionuclide.

A thickness of the radiation receiving device may be adjusted to the radioactive substance, such that the thickness measured in millimeters is 3 to 6 times the maximum kinetic energy of the particles emitted by radioactive decay of the radioactive substance measured in mega electron volts. In general, the radiation receiving device may have a thickness of 1 mm to 2 cm.

A width of the radiation receiving device may be adjusted to the radioactive substance, such that a length of a portion of the radiation receiving device which extends beyond the specific region measured in millimeters is 3 to 6 times the maximum kinetic energy of the particles emitted by radioactive decay of the radioactive substance measured in mega electron volts.

In one embodiment, the radioactive substance may emit positrons (beta-plus radiation) and the radiation receiving device may be adapted to prevent an escape of the positrons and to generate annihilation radiation within the radiation receiving device which is detected by the detection device. This embodiment may be used in positron emission tomography (PET). The detection device may comprise at least two detectors coupled with each other in a coincidence circuit and configured to detect the annihilation radiation (photons). The detector device may further comprise several detectors for detecting the photons which are arranged in one or several rings or subrings. Detectors for PET are known in the art and are not further described herein.

By PET, not the position of the positron emission from the radioactive substance is determined, but the position of the subsequent annihilation event. If the radioactive substance is completely surrounded by tissue of the subject, the range of a positron from typically used radioisotopes is several millimeters and the region where the radioactive substance is deposited can be detected. However, if the radioactive substance is deposited or accumulates in a specific region close below or at the surface of the subject, part of the positrons emitted by the radioactive substance may escape through the surface of the subject and move into the surrounding air. Air has a mass density which is much lower than the mass density of the tissue. In air, the range of a positron before it annihilates with an electron is much larger, namely several meters for typically used radioisotopes. In conventional PET, the positrons moving through the air are lost for detection.

According to the present disclosure, the radiation receiving device is arranged on the surface of the subject above the specific region where the radioactive substance is deposited or accumulates. Thus, positrons leaving the specific region through the surface of the subject enter the radiation receiving device. In the radiation receiving device, the positrons interact with electrons generating annihilation radiation close to the specific region which can be detected by the detection device. Thus, the signal intensity of PET may be increased by the radiation receiving device.

In another embodiment, the radioactive decay of the radioactive substance may result in the emission of charged particles and the radiation receiving device may be adapted to generate light emission from Cherenkov radiation. The detection device may be one or more optical detection devices which are adapted to detect the light emission. "Light" will be understood to include ultra-violet, visible and near-infrared wave lengths.

The direction of the Cherenkov radiation in relation to a path of the particle is described by the so-called Mach-cone. The relation of the particle velocity *v* and the velocity of light in vacuum c is called $\beta$ $\left(\beta = \frac{v}{c}\right)$. The angle $\theta$ between the path of the particle and the direction of the Cherenkov radiation is defined by:

$$\cos\theta = \frac{c'}{v} = \frac{1}{n\beta},$$

where $c' = \frac{c}{n}$ is the velocity of light in a medium with refraction index *n*. Cherenkov radiation has a continuous frequency spectrum, which comprises visible light. The frequency spectrum and the amount of Cherenkov radiation generated per path length is defined by the Frank-Tamm-formula:

$$\frac{d^2N}{d\omega\,dx} = \frac{z^2\alpha}{c}\sin^2\theta,$$

where *N* is the number of generated photons $\omega$ is the angular frequency of the photons, x is the path length, z is the charge, and $\alpha$ is the fine structure constant.

If the radioactive substance is completely surrounded by tissue of the subject, the range of a positron or an electron from typically used radioisotopes is several millimeters and the region where the radioactive substance is deposited can be detected. However, if the radioactive substance is deposited or accumulates in a specific region close below or at the surface of the subject, a portion of the positrons or electrons emitted by the radioactive substance may escape through the surface of the subject and move into the surrounding air. Air has a mass density which is much lower than the mass density of the tissue. Thus, the range of positrons or electrons in air is in the order of several meters and particles escaping in the air are lost for the detection process.

The charged particles may comprise beta-plus particles (positrons), beta-minus particles (electrons), alpha particles (He+), Auger electrons, Compton electrons liberated in the scattering of gamma rays and combinations thereof. The optical detection device may be one or multiple CCD cameras (CCD - charge-coupled device) and / or electron multiplying CCD cameras (EM-CCD). The optical detection device may be cooled. The following radionuclides may produce Cherenkov radiation in human, animal, or plant tissue: C-11, N-13, O-15, F-18, P-32, Zr-89, Y-90, I-124, I-131 and Lu-177. In air, the creation of Cherenkov radiation is less probable. By arranging the radiation receiving device on the surface of the subject above the specific region, Cherenkov radiation can be generated in the radiation receiving device.

Cherenkov radiation may have a higher spatial resolution than PET.

The radioactive substance may also be called a tracer. Several radionuclides suitable for PET or Cherenkov imaging are listed in the following table, wherein $E_{max}$ is the maximum kinetic energy and $R_{max}$ is the estimated maximum range (in air and in water) of the relevant emitted particle as derived from $E_{max}$.

| Radionuclide | Emission | $E_{max}$ [MeV] | $R_{max}$ in air [cm] | $R_{max}$ in water [cm] |
|---|---|---|---|---|
| C-11 | $\beta^+$ | 0.961 | 325 | 0.392 |
| N-13 | $\beta^+$ | 1.198 | 429 | 0.517 |
| O-15 | $\beta^+$ | 1.735 | 676 | 0.814 |
| F-18 | $\beta^+$ | 0.634 | 190 | 0.229 |
| Na-22 | $\beta^+$ | 0.546 | 156 | 0.188 |
| P-32 | $\beta^-$ | 1.709 | 664 | 0.799 |
| Sc-44 | $\beta^+$ | 0.632 | 189 | 0.228 |
| Sc-47 | $\beta^-$ | 0.600 | 177 | 0.213 |
| Cu-64 | $\beta^+$ | 0.653 | 198 | 0.238 |
| Cu-64 | $\beta^-$ | 0.579 | 169 | 0.203 |
| Cu-67 | $\beta^-$ | 0.577 | 168 | 0.202 |
| Ga-68 | $\beta^+$ | 1.885 | 747 | 0.899 |

(continued)

| Radionuclide | Emission | $E_{max}$ [MeV] | $R_{max}$ in air [cm] | $R_{max}$ in water [cm] |
|---|---|---|---|---|
| As-71 | β+ | 0.810 | 261 | 0.315 |
| As-72 | β+ | 3.340 | 1454 | 1.751 |
| As-74 | β+ | 1.540 | 585 | 0.704 |
| As-74 | β- | 1.353 | 499 | 0.601 |
| As-77 | β- | 0.680 | 208 | 0.251 |
| Br-76 | β+ | 3.382 | 1475 | 1.776 |
| Rb-82 | β+ | 3.381 | 1475 | 1.776 |
| Y-86 | β+ | 2.243 | 918 | 1.105 |
| Sr-89 | β- | 1.495 | 564 | 0.679 |
| Zr-89 | β+ | 0.902 | 300 | 0.361 |
| Y-90 | β+ | 0.738 | 232 | 0.279 |
| Y-90 | β- | 2.279 | 935 | 1.126 |
| I-124 | β+ | 2.138 | 867 | 1.044 |
| I-131 | β- | 0.606 | 179 | 0.216 |
| Pm-149 | β- | 1.070 | 373 | 0.449 |
| Sm-153 | β- | 0.705 | 218 | 0.263 |
| Tb-161 | β- | 0.590 | 173 | 0.208 |
| Dy-165 | β- | 1.286 | 469 | 0.564 |
| Ho-166 | β- | 1.854 | 732 | 0.881 |
| Er-169 | β- | 0.353 | 86 | 0.104 |
| Lu-177 | β- | 0.498 | 138 | 0.166 |
| Re-186 | β- | 1.070 | 373 | 0.449 |
| Re-188 | β- | 2.120 | 859 | 1.034 |
| Au-198 | β- | 0.961 | 325 | 0.392 |
| Au-199 | β- | 0.453 | 121 | 0.146 |
| Pb-212 | β- | 0.574 | 167 | 0.201 |

At least a portion of the radiation receiving device or the complete radiation receiving device may be transparent to one of the following: visible light, near-infrared radiation, infrared radiation, ultraviolet radiation and a combination thereof.

The method may further comprise a step of fixing the radiation receiving device to the surface by an adhesive. The adhesive may be provided on the radiation receiving device. For example, the adhesive may be provided on a border area of the radiation receiving device, leaving open an inner region which is arranged above the specific region. Alternatively, a complete surface of the radiation receiving device may be covered with the adhesive. The adhesive may be transparent for visible light, infrared radiation, ultraviolet radiation and combinations thereof. The step of fixing may be performed without damaging the surface of the subject, e.g. the skin of the subject shall not be injured when fixing the radiation receiving device.

The radiation receiving device may comprise a material having a mass density between 0.5 g/cm$^3$ and 2.5 g/cm$^3$. Parts of the radiation receiving device or the complete radiation receiving device may be made of a material having a mass density between 0.5 g/cm$^3$ and 2.5 g/cm$^3$. The property of a material to stop positrons, electrons or other charged particles in order to generate annihilation radiation and / or Cherenkov radiation can be defined by the mass density which is approximately proportional to the electron density.

The radiation receiving device may comprise a material having a mass density larger than the mass density of air. Parts of the radiation receiving device or the complete radiation receiving device may be made of a material having a mass density larger than the mass density of air. The radiation receiving device may comprise a material having a mass density which is similar to the mass density of tissue of the subject. Parts of the radiation receiving device or the complete radiation receiving device may be made of a material having a mass density which is similar to the mass density of tissue of the subject.

The radiation receiving device may comprise a solid material, a flexible material, a gel material or a combination thereof. The radiation receiving device may be made of a solid material, a flexible material, a gel material or a combination thereof.

The radiation receiving device may comprise a plastic material, a rubber material, a silicon rubber material, a foam material or a combination thereof. The radiation receiving device may be made of a plastic material, a rubber material, a silicon rubber material, a foam material or a combination thereof.

The radiation receiving device may comprise a dielectric material. The radiation receiving device may be made of a dielectric material. In particular, when the radiation receiving device is used for generating Cherenkov radiation, a dielectric material may be used for parts of the radiation receiving device or for the complete radiation receiving device.

The radiation receiving device may comprise a non-metallic material and / or a non-magnetic material. The radiation receiving device may be made of a non-metallic material and / or of a non-magnetic material. If PET is combined with magnetic resonance imaging (MRI) or computed tomography (CT) using metallic materials and / or magnetic (ferromagnetic) materials for the radiation receiving device may lead to artifacts in MRI / CT images. In order to avoid such artifacts, a non-metallic material and / or a non-magnetic material may be provided for the radiation receiving device.

The radiation receiving device may be formed as a patch having a layer and / or a container of a radiation receiving material. The radiation receiving material may be arranged in an inner region of the patch. An outer region of the patch may comprise an adhesive layer for fixing the patch to the surface. The adhesive layer may be formed in parts of the inner and / or outer region or may cover the complete inner and / or outer region of the patch. The patch may be arranged on the surface such that the radiation receiving material covers the specific region. All features disclosed for the material of the radiation receiving device may also apply to the radiation receiving material and vice versa.

The radiation receiving device may have a flat form or may be formed as a semi-circle.

Following, a list of suitable materials for the radiation receiving device and / or the radiation receiving material is provided:

- polymethylmethacrylate (PMMA, mass density 1.19 g/cm$^3$),
- polycarbonate (e.g. Macrolon or Lexan; PC according to DIN ISO 1629),
- silicone rubber (SI according to DIN ISO 1629),
- rubber (mass density between 0.92 - 0.96 g/cm$^3$),
- chloroprene rubber (e.g. Neopren; CR according to DIN ISO 1629),
- styrene butadiene rubber (SBR according to DIN ISO 1629),
- styrene butadiene latex (SBL according to DIN ISO 1629),
- nitrile rubber (NBR according to DIN ISO 1629),
- polybutadiene rubber (BR according to DIN ISO 1629),
- ethylene propylene diene rubber (EPDM according to DIN ISO 1629),
- fluorine rubber (e.g. Viton; FPM and FKM according to DIN ISO 1629),
- natural rubber (NR according to DIN ISO 1629),
- polyurethane (PU according to DIN ISO 1629),
- poly vinyl chloride (PVC),
- paper (mass density approximately 0.8 g/cm$^3$),
- paraffin (mass density 0.86 - 0.93 g/cm$^3$),
- wax (mass density 0.9 - 0.98 g/cm$^3$),
- water (mass density approximately 1 g / cm$^3$),
- polystyrene (mass density 1.04 - 1.09 g/cm$^3$),
- laminated paper (e.g. Pertinax; mass density 1.35 g/cm$^3$),
- quartz glass (mass density 2.201 g/cm$^3$),
- glass,
- hydrocolloid, and
- gel, e.g. comprising: poly(oxythylen)-54-hydrated ricinus oil, polyacrylic acid (carbomer 974P), sodium hydroxide, purified water, cellulose, polyethylene, poly(acrylamide-co-isooctylacrylate), bleached film coated with polyethylene and siliconized.

The DIN ISO 1629 refers to the standard DIN ISO 1629:2015-03 published in March 2015.

All materials may be used for forming the radiation receiving device as a single piece or as radiation receiving material of a patch.

In another embodiment, the radiation receiving material may be formed as foam, e.g. from a foamable material which may be selected from the above mentioned materials.

The radiation receiving device may comprise a fluorophore and / or fluorescent particles, in particular when used for generating Cherenkov radiation. A fluorophore is a fluorescent chemical compound that can re-emit light upon light excitation. The fluorophore absorbs light energy of a specific wavelength and re-emits light at a different (e.g. longer) wavelength. The light from Cherenkov radiation which exhibits predominantly shorter wavelengths may be absorbed by the fluorophore and re-emitted with a longer wavelength. Several fluorophores are suitable for Cherenkov imaging. Following, a list of suitable fluorophores for the radiation receiving device is provided:

- phosphor
- fluorescent proteins, and
- non-protein organic fluorophores, e.g.

  • Xanthene derivatives: e.g. fluorescein, rhodamine (e.g. rhodamine 6G, rhodamine B, rhodamine 123, Carboxytetramethylrhodamine (TAMRA), tetramethylrhodamine (TMR) and its isothiocyanate derivative (TRITC) and, sulforhodamine 101 - and its sulfonyl chloride form Texas Red - and Rhodamine Red, Alexa 546, Alexa 555, Alexa 633, DyLight 550 and DyLight 633, HiLyte fluor 555 HiLyte 594), Oregon green, and eosin,
  • Cyanine derivatives: e.g. cyanine, indocarbocyanine, oxacarbocyanine, thiacarbocyanine, and merocyanine, indocyanine green, infracyanine green
  • Squaraine derivatives or ring-substituted squaraines, including Seta, SeTau, and Square dyes,
  • Naphthalene derivatives: e.g. dansyl and prodan derivatives,
  • Coumarin derivatives,
  • Oxadiazole derivatives: e.g. pyridyloxazole, nitrobenzoxadiazole and benzoxadiazole,
  • Anthracene derivatives: e.g. anthraquinones, including DRAQ5, DRAQ7 and CyTRAK Orange,
  • Pyrene derivatives: e.g. cascade blue,
  • Oxazine derivatives: e.g. Nile red, Nile blue, cresyl violet, oxazine 170,
  • Acridine derivatives: e.g. proflavin, acridine orange, acridine yellow,
  • Arylmethine derivatives: e.g. auramine, crystal violet, malachite green,
  • Tetrapyrrole derivatives: e.g. porphin, phthalocyanine, bilirubin.

Particular fluorophores considered are: Alexa Fluor dyes, including Alexa Fluor® 350, 405, 430, 488, 514, 532, 546, 555, 568, 594, 610, 633, 647, 660, 680, 700, 750, and 790 (Life Technologies, Carlsbad, Calif.); coumarin dyes, including 3-cyano-7-hydroxycoumarin, 6,8-difluoro-7-hydroxy-4-methylcoumarin, 7-amino-4-methylcoumarin, 7-ethoxy-4-trifluoromethylcoumarin, 7-hydroxy-4-methylcoumarin, 7-hydroxycoumarin-3-carboxylic acid, 7-dimethylamino-coumarin-4-acetic acid, 7-amino-4-methyl-coumarin-3-acetic acid, and 7-diethylamino-coumarin-3-carboxylic acid (Life Technologies, Carlsbad, Calif.); BODIPY® dyes, including BODIPY 493/503, FL, R6G, 530/550, TMR, 558/568, 564/570, 576/589, 581/591, TR, 630/650, and 650/655 (Life Technologies, Carlsbad, Calif.); Quantum Dots, including Qdot® 545 ITK™, Qdot 565 ITK, Qdot 585 ITK, Qdot 605 ITK, Qdot 655 ITK, Qdot 705 ITK, and Qdot 800 ITK (Life Technologies, Carlsbad, Calif.); Oregon Green® dyes, including Oregon Green 488, 488, and 514 (Life Technologies, Carlsbad, Calif.); LanthaScreen® Tb Chelates (Life Technologies, Carlsbad, Calif.); Rhodamine 110, Rhodamine Green, Rhodamine Red, Texas Red-X, Cascade Blue, Pacific Blue, Marina Blue, Pacific Orange, Dapoxyl Sulfonyl Chloride, Dapoxyl Carboxylic Acid, 1-Pyrenebutanoic Acid, 1-Pyrenesulfonyl Chloride, 2-(2,3-Naphthalimino) ethyl Trifluoromethanesulfonate, 2-Dimethylaminonaphthalene-5-Sulfonyl Chloride, 2-Dimethylaminonaphthalene-6-Sulfonyl Chloride, 3-Amino-3-Deoxydigoxigenin Hemisuccinamide, 4-Sulfo-2,3,5,6-Tetrafluorophenol, 5-(and-6)-Carboxyfluorescein, 5-(and-6)-Carboxynaphthofluorescein, 5-(and-6)-Carboxyrhodamine 6G, 5-(and-6)-Carboxytetramethylrhodamine, 5-(and-6)-Carboxy-X-Rhodamine, 5-Dimethylaminonaphthalene-1-Sulfonyl Chloride (Dansyl Chloride), 6-((5-Dimethylaminonaphthalene-1-Sulfonyl)amino) Hexanoic Acid, Succinimidyl Ester (Dansyl-X, SE), Lissamine Rhodamine B Sulfonyl Chloride, Malachite Green isothiocyanate, NBD Chloride, 4-Chloro-7-Nitrobenz-2-Oxa-1,3-Diazole (4-Chloro-7-Nitrobenzofurazan), NBD Fluoride; 4-Fluoro-7-Nitrobenzofurazan, 4-Fluoro-7-Nitrobenz-2-Oxa-1,3-Diazole, NBD-X, and PyMPO (Life Technologies, Carlsbad, Calif.); CyDyes®, including Cy 3, Cy 3B, Cy 3.5, Cy 5, Cy 5.5, Cy 7 (GE Healthcare, Little Chalfont, UK); ATTO dyes, including ATTO 390, 425, 465, 488, 495, 520, 532, 550, 565, 590, 594, 610, 611X, 620, 633, 635, 637, 647, 647N, 655, 680, 700, 729, and 740 (ATTO-TEC GmbH, Siegen, Germany); DY dyes, including DY 350, 405, 415, 490, 495, 505, 530, 547, 548, 549, 550, 554, 555, 556, 560, 590, 591, 594, 605, 610, 615, 630, 631, 632, 633, 634, 635, 636, 647, 648, 649, 650, 651, 652, 654, 675, 676, 677, 678, 679, 680, 681, 682, 700, 701, 703, 704, 730, 731, 732, 734, 749, 750, 751, 752, 754, 776, 777, 778, 780, 781, 782, 800, 831, 480XL, 481XL, 485XL, 510XL, 520XL, and 521XL (Dyomics, Jena, Germany); CF™ dyes, including CF 350, 405, 485, 488, 532, 543, 555, 568, 594, 620R, 633, 640R, 647, 660C, 660R, 680, 680R, 750, 770, and 790 (Biotium, Hayward, Calif.); CAL Fluor® dyes, including CAL Fluor Gold 540, Orange 560, Red 590, Red 610, Red 635 (Biosearch Technologies, Novato, Calif.); Quasar® dyes, including Quasar 570, 670, 705 (Biosearch Technologies, Novato, Calif.); Biosearch Blue and Pulsar® 650 (Biosearch Technologies, Novato, Calif.); DyLight® Fluor dyes, including DYLight 350, 405, 488, 550, 594, 633, 650, 680, 755, 800 (Thermo Fisher Scientific, Waltham, Mass.); FluoProbes® dyes, including FluoProbes 390, 488, 532, 547H, 594, 647H, 682, 752, 782 (Interchim, Montlu çon Cedex, France); SeTau dyes, including SeTau 380, 425, 405, 404, 655, 665, and 647 (SETA BioMedicals, Urbana, I11.); Square dyes, including Square 635, 660, and 685 (SETA BioMedicals, Urbana, I11.); Seta dyes, including, Seta 470, 555, 632, 633, 646, 650, 660, 670, 680, and 750 (SETA BioMedicals, Urbana, I11.); SQ-565 and SQ-780 (SETA BioMedicals, Urbana, I11.); Chromeo™ dyes, including Chromeo 488, 494, 505, 546, and 642 (Active Motif, Carlsbad, Calif.); Abberior STAR dyes, including STAR 440SX, 470SX, 488, 512, 580, 635, and 635P (Abberior GmbH, Gottingen, Germany); Abberior CAGE dyes, including CAGE 500, 532, 552, and 590 (Abberior GmbH, Gottingen, Germany); Abberior FLIP 565 (Abberior GmbH, Gottingen, Germany); IRDye® Infrared Dye, including IRDye 650, 680LT, 680RD, 700DX, 750, 800CW, and 800RS (LI-COR Biosciences, Lincoln, Nebr.); Tide Fluor™ dyes, including TF1, TF2, TF3, TF4, TF5, TF6, TF7, and TF8 (AAT Bioquest, Inc., Sunnyvale, Calif.); iFluor™ dyes, including iFluor™ 350, 405, 488, 514, 532, 555, 594, 610, 633, 647, 680, 700, 750, and 790 (AAT Bioquest, Inc., Sunnyvale, Calif.); mFluor™ dyes, including mFluor Blue 570, Green 620, Red 700, Red780, Violet 450, Violet 510, Violet 540, and Yellow 630 (AAT Bioquest, Inc., Sunnyvale, Calif.); trFluor™ Eu and trFluor Tb (AAT Bioquest, Inc., Sunnyvale, Calif.); HiLyte Fluor™ dyes, including HiLyte Fluor 405, 488, 555, 594, 647, 680, and 750 (AnaSpec, Inc., Fremont, Calif.); Terbium Cryptate and Europium Cryptate (Cisbio Bioassays, Codolet, France); and other nucleotide classical dyes, including FAM, TET, JOE, VIC™, HEX, NED, TAMRA, ROX™, Texas Red® (Biosearch Technologies, Novato, Calif.).

The method may further comprise the use of a fluorophore which is predominantly excited by light in the lower range of wave-lengths (e.g. absorption maximum at wavelengths below 440 nm) with a large Stokes' shift (e.g. at least 60 nm), a high molar extinction coefficient (e.g. at least 15,000 $cm^{-1}M^{-1}$) and a high quantum yield (e.g. at least 50%), e.g. Hoechst 33258, QDot® 585, Alexa Fluor 350, Fura-2, Indo-1, Fluoprobe 390A or 7-amino-4-methylcoumarin-3-acetic acid (AMCA).

The method may further comprise the solution of a fluorophore in a polar solvent, e.g. an organic solvent, to increase production efficiency of Cherenkov light, e.g. rhodamine 6G in ethanol or Dapoxyl-2-aminoethyl-sulfonamide in dimethylsulfoxide (DMSO) or in ethyl acetate.

The method may further comprise the adjustment of the pH in the solution with a pH-sensitive fluorochrome to increase production efficiency of Cherenkov light (e.g. 7-hydroxycoumarin with pH between 1.5 and 3, LysoSensor Yellow/Blue with pH between 8 and 10 or LysoSensor Yellow/Blue with pH between 2 and 4).

The method may further comprise the use of image fusion of one image taken in darkness (without illumination) as the optical image resulting from the Cherenkov luminescence originating from the subject as well as from the radiation receiving device, fused with a second image taken by the same detection device during illumination.

The method may further comprise applying a magnetic field above the specific region. The magnetic field may be applied such that a direction of the magnetic field is essentially perpendicular (or strictly perpendicular) to the surface of the subject or essentially parallel (or strictly parallel) to an optical axis of the optical detection device. Essentially perpendicular to the surface means within an angle of plus/minus 10° from the perpendicular arrangement, alternatively within an angle of plus/minus 5° from the perpendicular arrangement. Essentially parallel to the optical axis means within an angle of plus/minus 10° from the parallel arrangement, alternatively within an angle of plus/minus 5° from the parallel arrangement. Charged particles are subject to a force in a magnetic field which is defined by the velocity of the particle and the direction of the magnetic field vector, the so-called Lorentz force. In general, this force leads to spirally formed paths of the charged particles around the direction of the magnetic field lines. The beam direction of the Cherenkov radiation may be influenced in its relative intensity according to the sign of the electric charge of the particles and the direction of the magnetic field. Hereby, the signal strength of the Cherenkov radiation may be increased.

A permanent magnet may be arranged on the surface of the subject at the specific region. The permanent magnet may be formed as a torus or a ring, e.g. having an axial magnetization direction. The permanent magnet may comprise a samarium cobalt alloy or a neodymium iron boron alloy. The permanent magnet may be made of a samarium cobalt alloy or a neodymium iron boron alloy.

A height of a ring magnet with axial magnetization direction may be at most as large as an inner diameter of ring magnet. Hereby, a relative magnetic field strength in an inner region of the ring magnet may be maximized.

An inner region of a torus-formed permanent magnet or of a ring-formed permanent magnet may be at least partially or completely filled with the radiation receiving material.

The torus-formed magnet or ring-formed magnet may be arranged on the surface of the subject such that the lesion or parts of it are in the inner region of the torus-formed magnet or ring-formed magnet.

The radiation receiving device may be formed as a suit which partially or completely surrounds the subject. The radiation receiving device may be formed as a glove or a stocking. The radiation receiving device may be formed as a cap for a finger or a toe. The suit, the glove, and the stocking may be made of chloroprene rubber, e.g. with a thickness of 1 - 10 mm or 1 - 5 mm. The cap may be made of silicone rubber, e.g. with a thickness of 1 - 10 mm or 1 - 5 mm. The radiation receiving device may be provided as a bandage, e.g. with a thickness of 1 - 10 mm or 1 - 5 mm.

The radiation receiving device may be provided as a self-adhesive tape, e.g. comprising polyurethane foam and natural latex. The tape may be antiseptic, e.g. by adding dichlorophene.

For the Cherenlcov detection principle, the detection device may comprise two or more light detection devices (e.g. CCD cameras or EM-CCD cameras) connected to a computer system which is configured to store the optical plane images obtained from the light detection devices and to calculate reconstructions of the three-dimensional distribution of the radioactivity distribution by the principle of Cherenkov luminescence tomography (Li et al. Optics Letters 2010, 35;1109-1111).

The features disclosed in context with the method can be applied to the arrangement and vice versa.

DESCRIPTION OF EMBODIMENTS

Following, exemplary embodiments are disclosed with reference to figures. Here:

Fig. 1    shows a schematic representation of the PET principle.
Fig. 2    shows a schematic representation of the PET principle using a radiation receiving device.
Fig. 3    shows a schematic representation of the Cherenkov imaging principle using a radiation receiving device.
Fig. 4    shows another embodiment of the Cherenkov imaging principle using a radiation receiving device.
Fig. 5    shows the embodiment of Fig. 4 surrounded by a housing.
Fig. 6    shows several embodiments of the radiation receiving device.

Following, same reference numbers refer to same components.

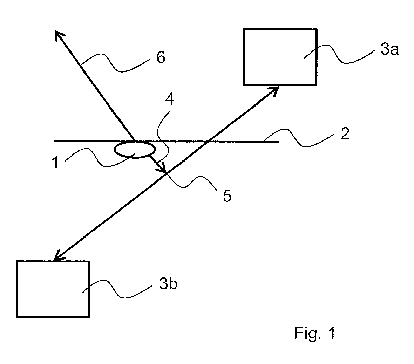

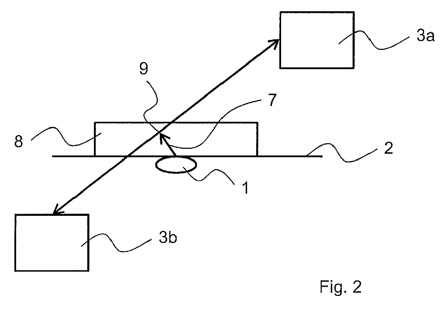

Fig. 1 shows a schematic representation of the PET principle as known in the prior art. A radioactive substance is inserted into or present in the subject. The radioactive substance is deposited or accumulates in a specific region 1, e.g. tumor cells. The specific region 1 is located close beneath the surface 2 of the subject. Alternatively or additionally, the specific region 1 can be located at the surface 2 of the subject. Two detectors 3a, 3b are provided in order to detect annihilation radiation. In Fig. 1 and 2, the region above the surface 2 is air and the region below the surface 2 is tissue of the subject.

A first positron 4 is emitted by the radioactive substance in the specific region 1. The first positron 4 propagates in the tissue below the surface 2. It interacts with an electron at a first interaction position 5 which is close to the specific region 1. The annihilation radiation emitted by the interaction is detected by the detectors 3a, 3b. This signal can be used to obtain information about the specific region 1, e.g. its radioactivity concentration. A second positron 6 is emitted and escapes from the specific region 1 through the surface 2 into the air. The second positron 6 moves through the air without being stopped to annihilate with an electron. The mean free path is very high (see table above) and the second positron 6 is lost for PET detection.

Fig. 2 shows a schematic representation of an arrangement where a radiation receiving device 8 is arranged on the surface 2 above the specific region 1. A third positron 7 is emitted and escapes from the subject through the surface 2 and enters the radiation receiving device 8. Because the mass density of the radiation receiving device 8 is higher than the mass density of air, an interaction of the third positron 7 with an electron occurs at a second interaction position 9. The second interaction position 9 is located inside the radiation receiving device 8 and close to the specific region 1. Annihilation radiation is detected by the detectors 3a, 3b. The signal strength at the detectors is increased. The arrangement may be used in PET detection. In this embodiment, the radiation receiving device 8 can also be called a "positron stopper".

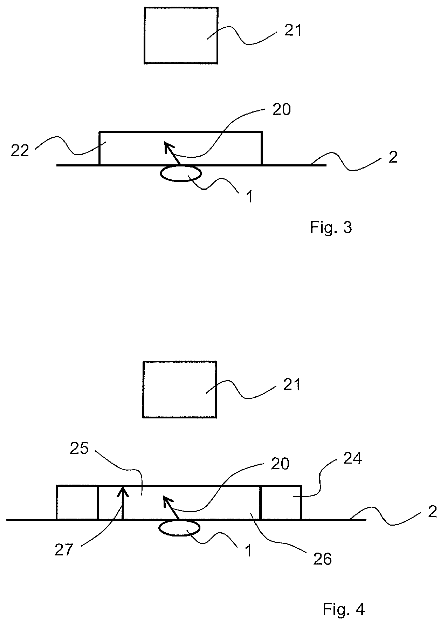

Fig. 3 shows a schematic representation of an arrangement which may be used in order to perform Cherenkov imaging. As above, a radioactive substance has accumulated in the specific region 1 which is located below the surface 2 of the subject. A charged particle 20 (e.g. an electron or a positron), which is generated by radioactive decay of the radioactive substance, is emitted and leaves the subject through the surface 2. The velocity of the charged particle 20 is reduced in the radiation receiving device 22 which comprises a dielectric material. Light emission is generated by Cherenkov radiation of the slowed-down charged particle 20. The light emission is detected by an optical detection device 21 (e.g. a CCD or an EM-CCD). More than one optical detection device may be used in order to detect the light emission. In this embodiment, the radiation receiving device 22 can also be called a "charged particle stopper". The radiation receiving device 22 may comprise a fluorochrome.

Another embodiment of an arrangement for Cherenkov imaging is shown in Fig. 4. A ring-formed permanent magnet 24 is arranged on the surface 2 such that an inner region 25 of the permanent magnet 24 is arranged above the specific region 1. The magnetic field vector 27 of the permanent magnet 24 is aligned almost perpendicular to the surface 2. The inner region 25 is filled with a dielectric material 26 being a radiation receiving material. The dielectric material 26 may comprise a fluorochrome.

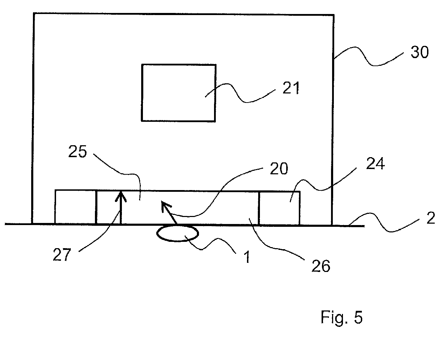

Fig. 5 shows the arrangement of Fig. 4, wherein the components are arranged in an opaque housing 30.

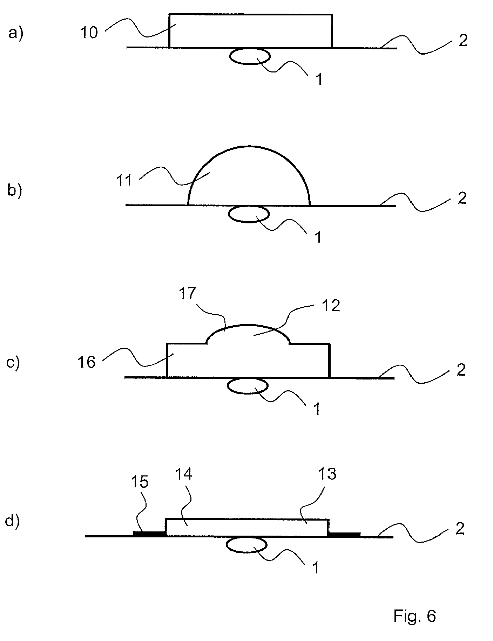

Fig. 6 shows several embodiments of radiation receiving devices. In Fig. 6a, a radiation receiving device 10 is formed as a plane layer on the surface 2. A radiation receiving device 11 with a rounded form, e.g. a semi-circle, is shown in Fig. 6b. In another embodiment, a radiation receiving device 12 is formed with a planar part 16 on which an elevated portion 17 is formed. The planar part 16 is arranged on the surface 2 such that the elevated portion is positioned above the specific region 1 (Fig. 6c). Fig. 6d shows a patch 13 comprising a radiation receiving material 14 and an outer portion 15. The outer portion 15 comprises an adhesive layer for fixing the patch 13 to the surface 2. The radiation receiving material 14 is arranged above the specific region 1. The embodiments shown in Fig. 6 can be used for PET as well as for Cherenkov imaging.

The features disclosed in the specification, the claims and the figures may be relevant for implementation of embodiments either alone or in any combination with each other.


**Claims**

1.  A method comprising steps of:

    - applying a radioactive substance to a subject, wherein the radioactive substance accumulates in a specific region (1) of the subject, wherein the specific region (1) is located below a surface (2) of the subject or at the surface (2) of the subject,
    - arranging a radiation receiving device (8; 22) on the surface of the subject (2) above the specific region (1), wherein the radiation receiving device (8; 22) is adapted to generate a signal from radiation emitted by the radioactive substance and entering the radiation receiving device (8; 22), and
    - detecting the signal by a detection device (3a, 3b; 21).

2.  The method of claim 1, wherein a thickness of the radiation receiving device (8; 22) is adjusted to the radioactive substance, such that the thickness measured in millimeters is 3 to 6 times the maximum kinetic energy of the particles emitted by radioactive decay of the radioactive substance measured in mega electron volts.

3.  The method of claim 1 or 2, wherein a width of the radiation receiving device (8; 22) is adjusted to the radioactive substance, such that a length of a portion of the radiation receiving device (8; 22) which extends beyond the specific region (1) measured in millimeters is 3 to 6 times the maximum kinetic energy of the particles emitted by radioactive decay of the radioactive substance measured in mega electron volts.

4.  The method of one of the preceding claims, wherein the radiation receiving device (8; 22) comprises a material having a mass density between 0.5 $g/cm^3$ and 2.5 $g/cm^3$.

5.  The method of one of the preceding claims, wherein the radiation receiving device (8; 22) is formed as a patch (13) having a layer and / or a container of a radiation receiving material (14).

6.  The method of one of the preceding claims, further comprising a step of fixing the radiation receiving device (8; 22) to the surface (2) of the subject by an adhesive.

7.  The method of one of the preceding claims, wherein at least a portion of the radiation receiving device (8; 22) is transparent to one of the following: visible light, infrared or near-infrared radiation, ultraviolet radiation and a combination thereof.

8.  The method of one of the preceding claims, wherein the radioactive substance emits positrons and the radiation receiving device (8) is adapted to prevent an escape of the positrons and to generate annihilation radiation within the radiation receiving device (8) which is detected by the detection device (3a, 3b).

9.  The method of one of the claims 1 to 7, wherein the radioactive decay of the radioactive substance results in the emission of charged particles and the radiation receiving device (22) is adapted to generate light emission from Cherenkov radiation, and wherein the detection device (21) is an optical detection device which is adapted to detect the light emission.

10. The method of claim 9, wherein the radiation receiving device (22) comprises a fluorophore and / or fluorescent particles.

**11.** The method of claim 9 or 10, further comprising applying a magnetic field above the specific region (1).

**12.** The method of claim 11, wherein the magnetic field is applied such that a direction of the magnetic field is essentially perpendicular to the surface (2) of the subject or essentially parallel to an optical axis of the optical detection device (21).

**13.** The method of claim 11 or 12, wherein a permanent magnet (24) is arranged on the surface (2) of the subject at the specific region (1), wherein the permanent magnet (24) is preferably formed as a torus or a ring.

**14.** Use of a radiation receiving device (8; 22) in one of the preceding methods, wherein the radiation receiving device (8; 22) is adapted to generate a signal from radiation emitted by a radioactive substance and entering the radiation receiving device (8; 22).

**15.** An arrangement, comprising:

- a radioactive substance which is applied to a subject, wherein the radioactive substance accumulates in a specific region (1) of the subject, wherein the specific region (1) is located below a surface (2) of the subject or at the surface (2) of the subject,
- a radiation receiving device (8; 22) which is arranged on the surface (2) of the subject above the specific region (1), wherein the radiation receiving device (8; 22) is adapted to generate a signal from radiation emitted by the radioactive substance and entering the radiation receiving device (8; 22), and
- a detection device (3a, 3b; 21) which is adapted to detect the signal.

Fig. 1

Fig. 2

Fig. 3

Fig. 4

Fig. 5

a) 10 — 2

1

b) 11 — 2

1

c) 17 12

16 — 2

1

d) 15 14 13

2

1

Fig. 6

Europäisches
Patentamt

European
Patent Office

Office européen
des brevets

# EUROPEAN SEARCH REPORT

Application Number

EP 16 18 3079

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/059426 A2 (KONINKL PHILIPS ELECTRONICS NV [NL]; PHILIPS INTELLECTUAL PROPERTY [DE] 22 May 2008 (2008-05-22) | 1,5,6,8, 14,15 | INV. G01T1/29 |
| Y | * figures 2, 3, 4 * <br> * page 6, lines 13-31 * <br> * page 7, lines 4-5 * <br> * page 9, lines 15-18 * <br> * page 10, line 6 - page 11, line 20 * <br> ----- | 7 | |
| X | WO 03/047694 A2 (SICEL TECHNOLOGIES INC [US]; BLACK ROBERT D [US]; MANN GREGORY GLENWOO) 12 June 2003 (2003-06-12) <br> * figures 1, 2, 5, 8A * <br> * page 11, lines 15-20 * <br> * page 19, lines 11-17 * <br> ----- | 1,4,15 | |
| X | WO 2014/020359 A1 (LIGHTPOINT MEDICAL LTD [GB]) 6 February 2014 (2014-02-06) <br> * claim 1 * <br> * figures 4A, 4C * <br> * page 8, lines 18-26 * <br> * page 18, lines 4-12 * <br> * page 21, lines 10-15 * <br> * page 22, lines 4-7 * <br> ----- | 1,9-13, 15 | |
| Y | WO 2016/064133 A1 (SAMSUNG ELECTRONICS CO LTD [KR]) 28 April 2016 (2016-04-28) <br> * paragraph [0165] * <br> ----- | 7 | TECHNICAL FIELDS SEARCHED (IPC) <br><br> G01T |

The present search report has been drawn up for all claims

| Place of search | Date of completion of the search | Examiner |
|---|---|---|
| The Hague | 18 January 2017 | Johnstone, John |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 18 3079

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2017

| Patent document cited in search report | | Publication date | Patent family member(s) | | Publication date |
|---|---|---|---|---|---|
| WO 2008059426 | A2 | 22-05-2008 | EP | 2083871 A2 | 05-08-2009 |
| | | | JP | 5457191 B2 | 02-04-2014 |
| | | | JP | 2010509605 A | 25-03-2010 |
| | | | US | 2010133440 A1 | 03-06-2010 |
| | | | WO | 2008059426 A2 | 22-05-2008 |
| WO 03047694 | A2 | 12-06-2003 | AU | 2002346568 A1 | 17-06-2003 |
| | | | CA | 2467654 A1 | 12-06-2003 |
| | | | EP | 1450899 A2 | 01-09-2004 |
| | | | JP | 4727145 B2 | 20-07-2011 |
| | | | JP | 2005512028 A | 28-04-2005 |
| | | | TW | I261523 B | 11-09-2006 |
| | | | US | 2003125616 A1 | 03-07-2003 |
| | | | US | 2004236207 A1 | 25-11-2004 |
| | | | US | 2005010110 A1 | 13-01-2005 |
| | | | US | 2005090738 A1 | 28-04-2005 |
| | | | US | 2009121144 A1 | 14-05-2009 |
| | | | US | 2009127469 A1 | 21-05-2009 |
| | | | US | 2009250602 A1 | 08-10-2009 |
| | | | US | 2011121188 A1 | 26-05-2011 |
| | | | US | 2011161012 A1 | 30-06-2011 |
| | | | US | 2011210258 A1 | 01-09-2011 |
| | | | WO | 03047694 A2 | 12-06-2003 |
| WO 2014020359 | A1 | 06-02-2014 | CN | 104755014 A | 01-07-2015 |
| | | | CN | 104780829 A | 15-07-2015 |
| | | | EP | 2879565 A1 | 10-06-2015 |
| | | | EP | 2879566 A1 | 10-06-2015 |
| | | | JP | 2015525645 A | 07-09-2015 |
| | | | JP | 2015531061 A | 29-10-2015 |
| | | | KR | 20150054783 A | 20-05-2015 |
| | | | KR | 20150058174 A | 28-05-2015 |
| | | | US | 2015230696 A1 | 20-08-2015 |
| | | | US | 2015241363 A1 | 27-08-2015 |
| | | | WO | 2014020359 A1 | 06-02-2014 |
| | | | WO | 2014020360 A1 | 06-02-2014 |
| WO 2016064133 | A1 | 28-04-2016 | KR | 20160048537 A | 04-05-2016 |
| | | | US | 2016116609 A1 | 28-04-2016 |
| | | | WO | 2016064133 A1 | 28-04-2016 |

EPO FORM P0459

For more details about this annex : see Official Journal of the European Patent Office, No. 12/82

**EP 3 279 699 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LI et al.** *Optics Letters,* 2010, vol. 35, 1109-1111